(19) Europäisches Patentamt
European Patent Office
Office européen des brevets

(11) **EP 3 029 860 A1**

(12) **DEMANDE DE BREVET EUROPEEN**

(43) Date de publication:
**08.06.2016 Bulletin 2016/23**

(51) Int Cl.:
***H04B 10/291*** *(2013.01)*    ***H01S 3/067*** *(2006.01)*
***H01S 3/094*** *(2006.01)*

(21) Numéro de dépôt: **14306953.2**

(22) Date de dépôt: **05.12.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **ALCATEL LUCENT**
**92100 Boulogne-Billancourt (FR)**

(72) Inventeurs:
• **Simonneau, Christian**
  **91620 NOZAY (FR)**
• **Salsi, Massimiliano**
  **91620 NOZAY (FR)**

(74) Mandataire: **Berthier, Karine et al**
**Alcatel-Lucent International**
**148/152, route de la Reine**
**92100 Boulogne-Billancourt (FR)**

(54) **Système d'amplification optique**

(57)    Le système d'amplification optique comporte au moins un guide d'onde optique d'entrée transportant un signal optique de données à amplifier, au moins un guide d'onde optique de sortie transportant un signal optique de données amplifié, et au moins un amplificateur optique disposé entre le guide d'onde optique d'entrée et le guide d'onde optique de sortie. Une lanterne photonique est placée entre une source de pompage multimode et l'amplificateur optique pour transférer l'énergie de la source de pompage multimode à l'amplificateur optique la lanterne photonique est reliée d'une part à la sortie de la source de pompage multimode et d'autre part à l'entrée d'une pluralité de guides d'onde optique de pompe. Un atténuateur optique variable peut être placé sur chacun des guides d'onde optique de pompe, entre la lanterne photonique et l'amplificateur optique.

**FIG. 3**

EP 3 029 860 A1

**Description**

DOMAINE

La présente invention se rapporte au domaine des systèmes de transmission optique, et en particulier mais non exclusivement à l'amplification d'un signal optique dans les systèmes de transmission optique.

ARRIERE PLAN

Les fibres optiques monomodes SMF (pour « Single Mode Fiber » en anglais) à coeur unique sont le support le plus utilisé dans les réseaux de télécommunications actuels, notamment sur de longues distances. Chaque fibre optique transporte un signal optique monomode qui est amplifié séparément au moyen d'un amplificateur optique associé à un laser de pompe monomode. La récente croissance exponentielle du trafic de données va dépasser la capacité disponible de la fibre optique monomode SMF dans un proche avenir. En outre un tel système comportant un laser de pompe par fibre optique SMF se révèle coûteux.

Pour surmonter les limitations de capacité rencontrées par les fibres optiques monomodes SMF, le multiplexage spatial dans une même fibre optique est obtenu par l'utilisation de fibres optiques multicoeur dite MCF (pour « Multi Core Fiber » en anglais) ou de fibres optiques multimodes dites MMF (pour Multi Mode Fiber » en anglais) dans les systèmes de transmission optique.

Les fibres optiques multimode MMF ont été les premières sur le marché. Elles ont pour caractéristique de pouvoir transporter un signal optique plusieurs modes dans un coeur unitaire. Elles sont utilisées pour des bas débits ou de courtes distances.

Une fibre optique multicoeur MCF (pour « Multi Core Fiber » en anglais) est constituée de plusieurs coeurs suffisamment espacés pour que le couplage résiduel entre les coeurs soit négligeable. Chaque coeur unitaire est capable de transmettre des signaux optiques monomodes ou multimodes sensiblement indépendants. Une fibre optique multicoeur MCF peut fournir une capacité de transmission de données beaucoup plus grande qu'une fibre optique monomode SMF à coeur unique. Ainsi une fibre optique multicoeur MCF permet une augmentation importante de la capacité totale transportée sur une fibre optique unique pour un coût moindre que celui d'une fibre optique monomode SMF.

Il existe actuellement plusieurs solutions permettant de réaliser un dispositif d'amplification optique pour une fibre optique multicoeur MCF.

Une première solution consiste à démultiplexer spatialement le signal optique issu d'une fibre optique multicoeur MCF de manière à obtenir des signaux optiques séparés circulant dans des fibres optiques à coeur unique. Le signal optique transporté par chaque fibre optique est amplifié séparément au moyen d'un amplificateur optique associé à un laser de pompe. Les signaux optiques une fois amplifiés sont multiplexés pour être renvoyés dans la fibre optique multicoeur MCF. Cette solution n'apporte pas d'avantage à l'utilisation d'une fibre optique multicoeur MCF par rapport à un faisceau de fibres optiques à coeur unique dans la mesure où elle emploie le même système d'amplification, avec en outre le besoin d'un multiplexeur et d'un démultiplexeur à chaque site d'amplification.

Dans une autre solution, les signaux optiques circulant dans les coeurs unitaires d'une fibre optique multicoeur MCF sont amplifiés simultanément au moyen d'un amplificateur optique à pompage par la gaine CP-MC-EDFA (pour « Cladding-Pumped Multi Core-Erbium Doped Fiber Amplifier » en anglais). L'amplificateur optique CP-MC-EDFA comporte une fibre optique multicoeur MCF dopé à l'erbium à double gaine qui est pompée par la gaine optique à l'aide d'un laser de pompe multimode. Cette solution peut fournir un rendement énergétique global électrique/optique supérieur à celui obtenue avec une pompe monomode.

Toutefois la première solution offre un rendement plus élevé pour la conversion de puissance optique-optique que la solution d'amplification avec pompage par la gaine. Néanmoins il existe un seuil pour lequel le moindre rendement de conversion de puissance optique-optique de l'amplification avec pompage par la gaine est compensé par un meilleur rendement énergétique global électrique/optique du système d'amplification. Cependant on rencontre des difficultés importantes dans l'optimisation et la fabrication d'un tel système d'amplification.

On connait encore une autre solution dans laquelle l'amplificateur optique comporte une fibre optique multicoeur MCF dopée à l'erbium qui est pompée par un laser de pompe monomode. A la différence de la solution qui précède, la fibre optique multicoeur MCF ne possède pas une structure à double gaine optique et n'est pas pompée par la gaine optique. Cette solution ne présente pas d'avantage par rapport à la première solution dans la mesure où elle nécessite pour chaque amplificateur optique un laser de pompe monomode et une fibre optique amplificatrice multicoeur MCF dopée à l'erbium dont la réalisation n'est pas aisée. De plus, des composants spécifiques doivent être développés tels que des isolateurs multicoeur, des filtres aplatisseurs de gain multicoeur, des coupleurs de pompe, des coupleurs multicoeurs, ou des atténuateurs optiques variables multicoeurs par exemple.

RESUME

Il s'agit donc d'éliminer les inconvénients de l'art antérieur en simplifiant l'architecture du système d'amplification par une réduction du nombre de sources de pompage nécessaire, et donc de parvenir à un coût moindre que celui des systèmes d'amplification actuels.

A cette fin on propose une architecture du système d'amplification optique permettant d'utiliser une seule source de pompage multimode pour pomper une pluralité d'amplificateurs optiques afin d'augmenter le rendement énergétique global électrique/optique du système d'amplification.

L'objet de la présente invention est un système d'amplification comportant :

- au moins un guide d'onde optique d'entrée transportant un signal optique de données à amplifier,
- au moins un guide d'onde optique de sortie transportant un signal optique de données amplifié,
- au moins un amplificateur optique disposé entre le guide d'onde optique d'entrée et le guide d'onde optique de sortie,
- une source de pompage multimode,
- une lanterne photonique placé entre la source de pompage multimode et l'amplificateur optique pour transférer l'énergie de la source de pompage multimode à l'amplificateur optique.

Le système d'amplification utilise un appareil appelé « lanterne photonique » qui converti un signal optique multimode issu de la source de pompage multimode en une pluralité de signaux optiques. En particulier dans le cas où le signal optique multimode issu de la source de pompage est converti en une pluralité de signaux optiques monomodes, un grand avantage de la lanterne photonique est qu'elle peut fonctionner pratiquement sans perte si le nombre de modes du côté du signal optique multimode est égal au nombre de guides d'onde optique monomodes à la sortie de la lanterne photonique.

Dans une guide d'onde optique multimode, le nombre de modes peut être exprimé par la formule suivante :

$$number\ of\ modes \approx \left[\frac{\pi.d.NA}{2\lambda}\right]^2$$

où NA et d sont respectivement l'ouverture numérique et la dimension du guide d'onde optique multimode et où λ est la longueur d'onde.

Selon un mode de réalisation, la lanterne photonique est reliée d'une part à la sortie de la source de pompage multimode et d'autre part à l'entrée d'une pluralité de guides d'onde optique de pompe. Les guides d'onde optique de pompe peuvent être des guides d'onde monomodes ou des guides d'onde multimodes.

Selon un aspect, le système d'amplification comporte au moins un guide d'onde optique d'entrée monomode et au moins un guide d'onde optique de sortie monomode et la lanterne photonique est reliée à l'entrée d'une pluralité de guides d'onde optique de pompe monomodes.

Selon un autre aspect, le système d'amplification comporte au moins un guide d'onde optique d'entrée multimode et au moins un guide d'onde optique de sortie multimode et la lanterne photonique est reliée à l'entrée d'une pluralité de guides d'onde optique de pompe multimodes.

Selon une variante, un atténuateur optique variable est placé sur chacun des guides d'onde optique de pompe, entre la lanterne photonique et l'amplificateur optique.

Selon une autre variante, l'amplificateur optique comprend un guide d'onde optique amplificateur dopé aux terres rares, par exemple à l'erbium, au néodyme, au praséodyme, à l'ytterbium ou au thulium.

L'invention a encore pour objet un procédé d'amplification au moyen de ce système d'amplification, comprenant :

- le transfert de l'énergie d'une source de pompage multimode à plusieurs guides d'onde optique monomodes au moyen d'une lanterne photonique,
- la transmission de l'énergie de la source de pompage à l'amplificateur optique monomode par les guides d'onde optique de pompe.

La présente invention a comme avantage d'offrir un rendement élevé pour la conversion de puissance optique/optique.

L'invention s'applique aux systèmes de transmission sur fibre optique de très haute capacité et pour de très longues distances. On entend par très longues distances, des distances telles que l'usage d'au moins un amplificateur devient nécessaire pour assurer une transmission du signal optique de données sans erreur.

BREVE DESCRIPTION

D'autres caractéristiques et avantages apparaîtront au cours des exemples suivants de réalisation particuliers, donnés bien entendu à titre illustratif et non limitatif, et dans le dessin annexé sur lequel

- la figure 1 illustre un premier mode de réalisation d'un système d'amplification dans un schéma co-propagatif,

- la figure 2 illustre un deuxième mode de réalisation d'un système d'amplification optique dans un schéma contra-propagatif,

- la figure 3 illustre un troisième mode de réalisation d'un système d'amplification optique de signaux optiques monomodes,

- la figure 4 illustre un quatrième mode de réalisation d'un système d'amplification optique de signaux optiques monomodes issus d'une fibre optique multicoeur,

- la figure 5 illustre un cinquième mode de réalisation d'un système d'amplification optique de signaux optiques multimodes issus d'une fibre optique multicoeur,

DESCRIPTION DETAILLEE

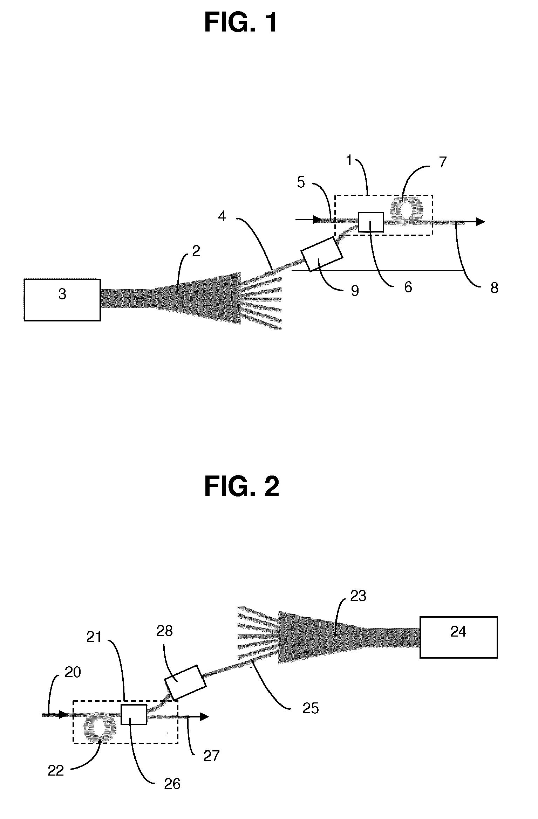

La figure 1 illustre un système d'amplification optique comprenant un amplificateur optique **1** relié à une lanterne photonique **2** qui permet de transférer l'énergie d'une source de pompage multimode **3,** telle qu'un laser de pompe ou une diode électroluminescente, à plusieurs guides d'onde optiques de pompe **4.** Cette énergie est utilisée pour pomper l'amplificateur optique **1,** ici dans un schéma co-propagatif.

Un guide d'onde optique **5** transporte un signal optique de données à amplifier qui est injecté à l'entrée de l'amplificateur optique **1** dans un multiplexeur **6.** Le multiplexeur **6** couple, dans le sens de propagation des signaux optiques, l'énergie de pompe au signal optique entrant. La sortie du multiplexeur **6** est reliée à un guide d'onde optique amplificateur **7** dopé aux terres rares, qui peut être par exemple une fibre optique dopée à l'erbium, au néodyme, au praséodyme, à l'ytterbium ou au thulium. La sortie de l'amplificateur optique **1** est reliée à un guide d'onde optique **8** qui transmet le signal optique de données une fois amplifié.

Un atténuateur optique variable VOA **9** peut être placé sur chaque guide d'onde optique de pompe **4** à la sortie de la lanterne photonique **2** afin d'avoir la possibilité de faire varier l'énergie de pompe affectée à chaque amplificateur optique **1,** ceci permettant de régler séparément le gain de chacun des amplificateurs optiques **1.**

Bien entendu, il est aussi possible d'injecter l'énergie de pompe dans un schéma contra-propagatif comme le montre la figure 2.

Un guide d'onde optique **20** transporte un signal optique de données à amplifier qui est injecté à l'entrée d'un amplificateur optique **21** dans un guide d'onde optique amplificateur **22** dopé aux terres rares, par exemple une fibre optique dopée à l'erbium, au néodyme, à l'ytterbium ou au thulium. Une lanterne photonique **23** permet de transférer l'énergie d'une source de pompage multimode **24,** par exemple un laser, à plusieurs guides d'onde optiques de pompe **25.** Cette énergie est utilisée pour pomper l'amplificateur optique **21.** Un multiplexeur **26** couple dans le sens contra-propagatif l'énergie de pompe au signal optique amplifié qui est envoyé à la sortie de l'amplificateur optique **21** dans un guide d'onde optique **27.** Un atténuateur optique variable VOA **28** peut être placé sur chaque guide d'onde optique de pompe **25** à la sortie de la lanterne photonique **23** afin d'avoir la possibilité de faire varier la puissance de pompe de chaque amplificateur optique **21.**

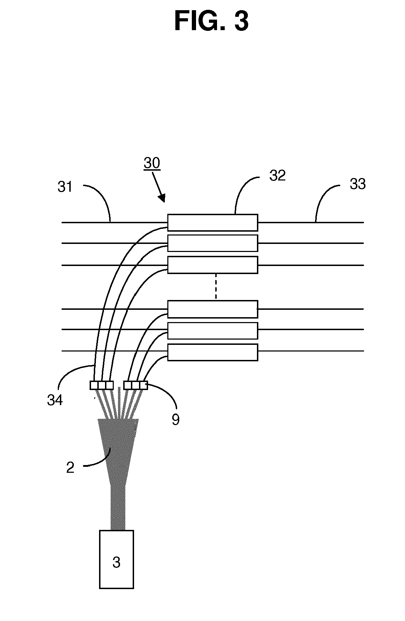

On considérera maintenant la figure 3 qui illustre un mode de réalisation d'un système d'amplification **30** comportant une pluralité de guides d'ondes monomodes **31** qui sont ici des fibres optiques. Chaque fibre optique monomode **31** est formée d'un coeur entouré d'une gaine optique (« cladding » en anglais). Chaque fibre optique **31,** transportant un signal optique de données monomode, est reliée à l'entrée d'un amplificateur optique **32,** ici par exemple un amplificateur optique de type EDFA. La sortie de l'amplificateur optique EDFA **32** est reliée à une fibre optique **33** qui transmet le signal optique de données monomode une fois amplifié.

Chaque amplificateur optique EDFA **32** est relié à un guide d'onde optique de pompe **34,** qui est dans ce cas une fibre optique monomode, et reçoit l'énergie de pompe d'un laser de pompage multimode **3** par l'intermédiaire d'une lanterne photonique **2.** Un atténuateur optique variable VOA **9** peut être placé sur chaque guide d'onde optique de pompe **34** à la sortie de la lanterne photonique **2** afin d'avoir la possibilité de faire varier la puissance de pompe affectée à chaque amplificateur optique **32.**

Les systèmes de transport optique par une guide d'onde optique multicoeur sont considérés comme prometteurs pour augmenter la capacité totale transportée sur un seul guide d'onde optique. L'un des principaux défis pour ces systèmes de transmission est de réaliser une amplification optique efficace pour ce type de guide d'onde optique multicoeur, qui ne nécessite pas de développer de nouveaux composants spécifiques.

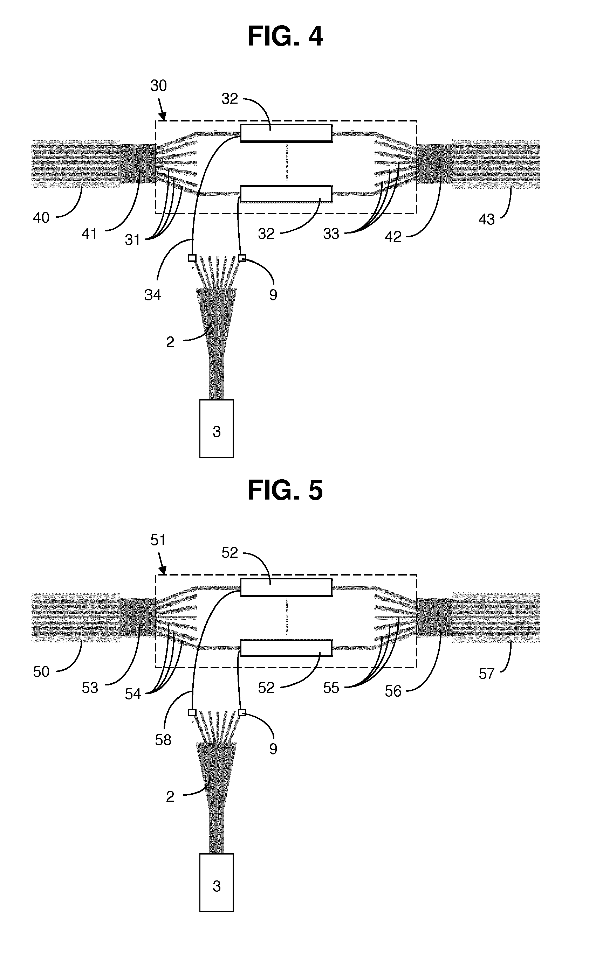

Dans le mode de réalisation illustré sur la figure 4, un guide d'onde optique **40,** qui est ici une fibre optique multicoeur MCF pour la transmission d'un signal optique de données, est relié à l'entrée d'un système d'amplification optique **30,** analogue à celui de la figure 3. Chacun des coeurs transporte un signal optique de données monomode à amplifier par le système d'amplification optique **30.** Le signal optique de données monomode entrant est démultiplexé spatialement par un démultiplexeur **41** en une pluralité de signaux optiques de données monomodes, chacun transporté par le coeur unique d'une fibre optique monomode **31.**

Chaque signal optique monomode est respectivement amplifié par un amplificateur optique **32** par exemple de type EDFA. Les signaux optiques monomodes amplifiés, portés par des fibres optiques **33** en sortie de l'amplificateur optique EDFA **32,** sont alors multiplexés par un multiplexeur **42.** Le signal optique multimode issu du multiplexeur **42** est envoyé dans une fibre optique multicoeur MCF **43** de sortie, qui peut être analogue à la fibre optique multicoeur MCF **40** d'entrée.

Chaque amplificateur optique EDFA **32** est relié à un guide d'onde optique de pompe **34,** qui est dans ce cas une fibre optique monomode, et reçoit l'énergie de pompe d'un laser de pompage multimode **3** par l'intermédiaire d'une lanterne photonique **2.** Un atténuateur optique variable VOA **9** peut être placé sur chaque guide d'onde optique de pompe **34** à la sortie de la lanterne photonique **2** afin d'avoir la possibilité de faire varier la puissance de pompe affectée à chaque amplificateur optique **32.**

La figure 5 illustre un autre mode de réalisation dans lequel, un guide d'onde optique **50,** qui est ici une fibre optique multicoeur MCF pour la transmission d'un signal optique de données multimode, est relié à l'entrée d'un système d'amplification optique **51.** Chacun des coeurs unitaires transporte un signal optique de données multimode à amplifier par un amplificateur optique **52** par exemple de type EDFA. Le signal optique de données entrant est démultiplexé par un démultiplexeur **53** en une pluralité de signaux optique de données multimodes, chacun transporté par le coeur unique d'une fibre optique multimode **54.**

Chaque signal optique multimode est respectivement amplifié par un amplificateur optique multimode EDFA **52.** Les signaux optiques multimodes amplifiés, portés par des fibres optiques multimodes **55** en sortie de l'amplificateur optique EDFA **52,** sont alors multiplexés par un multiplexeur **56.** Le signal optique multimode issu du multiplexeur **56** est envoyé dans une fibre optique multicoeur MCF **57** de sortie qui peut être analogue à la fibre optique multicoeur MCF **50** d'entrée.

Chaque amplificateur optique multimode EDFA **52** est relié à un guide d'onde optique de pompe **58,** qui est dans ce cas une fibre optique multimode, et reçoit l'énergie de pompe d'une source de pompage multimode **3,** telle qu'un laser, par l'intermédiaire d'une lanterne photonique **2.** Un atténuateur optique variable VOA **9** peut être placé sur chaque guide d'onde optique de pompe **58** à la sortie de la lanterne photonique **2** afin d'avoir la possibilité de faire varier la puissance de pompe affectée à chaque amplificateur optique **52.**

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, on peut utiliser tout type de source de pompage multimode comme par exemple un laser de pompe ou une diode électroluminescente. On peut aussi injecter l'énergie de pompe dans un schéma co-propagatif ou bien contra-propagatif.

**Revendications**

1. Système d'amplification optique comportant

   - au moins un guide d'onde optique d'entrée transportant un signal optique de données à amplifier,
   - au moins un guide d'onde optique de sortie transportant un signal optique de données amplifié,
   - au moins un amplificateur optique disposé entre le guide d'onde optique d'entrée et le guide d'onde optique de sortie,
   - une source de pompage multimode,
   - une lanterne photonique placé entre la source de pompage multimode et l'amplificateur optique pour transférer l'énergie de la source de pompage multimode à l'amplificateur optique.

2. Système selon la revendication 1, dans lequel la lanterne photonique est reliée d'une part à la sortie de la source de pompage multimode et d'autre part à l'entrée d'une pluralité de guides d'onde optique de pompe.

3. Système selon la revendication 2, comportant au moins un guide d'onde optique d'entrée monomode et au moins un guide d'onde optique de sortie monomode et la lanterne photonique est reliée à l'entrée d'une pluralité de guides d'onde optique de pompe monomodes.

4. Système selon la revendication 2, comportant au moins un guide d'onde optique d'entrée multimode et au moins un guide d'onde optique de sortie multimode et la lanterne photonique est reliée à l'entrée d'une pluralité de guides d'onde optique de pompe multimodes.

5. Système selon l'une des revendications précédentes, dans lequel un atténuateur optique variable est placé sur chacun des guides d'onde optique de pompe, entre la lanterne photonique et l'amplificateur optique.

6. Système selon l'une des revendications précédentes, dans lequel l'amplificateur optique comprend un guide d'onde optique amplificateur dopé aux terres rares.

7. Procédé d'amplification au moyen d'un système d'amplification selon l'une des revendications précédentes, comprenant:

   - le transfert de l'énergie d'une source de pompage multimode à plusieurs guides d'onde optique monomodes au moyen d'une lanterne photonique,
   - la transmission de l'énergie de la source de pompage à l'amplificateur optique monomode par les guides d'onde optique de pompe.

# FIG. 1

# FIG. 2

# FIG. 3

# FIG. 4

# FIG. 5

**EP 3 029 860 A1**

Europäisches
Patentamt

European
Patent Office

Office européen
des brevets

**RAPPORT DE RECHERCHE EUROPEENNE**

Numéro de la demande

EP 14 30 6953

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | CN 104 134 924 A (ACCELINK TECHNOLOGIES CO LTD) 5 novembre 2014 (2014-11-05) * figures 2,3,5 * * alinéas [0020], [0021], [0022], [0025], [0029] * | 1-3,5-7 | INV. H04B10/291 H01S3/067 H01S3/094 |
| Y | FONTAINE NICOLAS K: "Photonic lantern spatial multiplexers in space-division multiplexing", 2013 IEEE PHOTONICS SOCIETY SUMMER TOPICAL MEETING SERIES, IEEE, 8 juillet 2013 (2013-07-08), pages 97-98, XP032491822, DOI: 10.1109/PHOSST.2013.6614504 [extrait le 2013-09-27] * page 97 * | 1-3,5-7 | |
| Y | US 6 208 678 B1 (KING JONATHAN PAUL [GB]) 27 mars 2001 (2001-03-27) * figure 1 * * colonne 2, ligne 12-49 * * colonne 4, ligne 1-11 * | 1-3,5-7 | |
| X | NENG BAI ET AL: "Multimode fiber amplifier with tunable modal gain using a reconfigurable multimode pump", OPTICS EXPRESS, vol. 19, no. 17, 15 août 2011 (2011-08-15), page 16601, XP055048696, ISSN: 1094-4087, DOI: 10.1364/OE.19.016601 * le document en entier * | 4 | DOMAINES TECHNIQUES RECHERCHES (IPC) H04B H01S |
| A | EP 1 191 372 A2 (AGERE SYST OPTOELECTRONICS [US]) 27 mars 2002 (2002-03-27) * alinéas [0009], [0020] * * figure 3 * | 1-7 | |

Le présent rapport a été établi pour toutes les revendications

| Lieu de la recherche | Date d'achèvement de la recherche | Examinateur |
|---|---|---|
| Munich | 7 mai 2015 | Petitit, Nicolas |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

9

## ANNEXE AU RAPPORT DE RECHERCHE EUROPEENNE
### RELATIF A LA DEMANDE DE BREVET EUROPEEN NO.

EP 14 30 6953

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-05-2015

| Document brevet cité au rapport de recherche | | Date de publication | Membre(s) de la famille de brevet(s) | | Date de publication |
|---|---|---|---|---|---|
| CN 104134924 | A | 05-11-2014 | AUCUN | | |
| US 6208678 | B1 | 27-03-2001 | AUCUN | | |
| EP 1191372 | A2 | 27-03-2002 | CA | 2352950 A1 | 15-03-2002 |
| | | | EP | 1191372 A2 | 27-03-2002 |
| | | | JP | 2002148471 A | 22-05-2002 |
| | | | US | 6467969 B1 | 22-10-2002 |

EPO FORM P0460

Pour tout renseignement concernant cette annexe : voir Journal Officiel de l'Office européen des brevets, No.12/82